# EUROPEAN PATENT APPLICATION

(11) **EP 0 878 652 A1**
(43) Date of publication of application: **18.11.1998**
(21) Application number: 97830220.6
(22) Date of filing: 13.05.1997
(51) Int. Cl.: F16K 31/06

(54) **Solenoid slide valve, particularly for fuel supply to diesel engines**

(71) Applicant: C.E.I. s.r.l., 10090 Cascine Vica (Torino) (IT)
(72) Inventor: Tagliafico, Carlo, 10146 Torino (IT); Ottaviano, Piero, 10090 Cascine Vica (Torino) (IT)
(74) Representative: Spandonari, Carlo, Dr. Ing.

(57) **Abstract**

The solenoid valve has a bore (16) extending coaxially and tightly with a sleeve (32) having a terminal plug (46) and surrounded by a solenoid (38). In the bore, a spool (54), integral with a plunger (54a) in the sleeve, is received in easy push fit. The plunger and the spool are traversed by a longitudinal passage (72) for fluid comunication, which passage is open at both ends. Three ports (18, 20, 22) open in the lateral wall of the bore (16), and a fourth port (24) opens at one end of the casing. The spool is provided with peripheral lands (56, 58) and grooves (60, 62) interacting with said lateral ports (18, 20, 22). One of the grooves (60) communicates through one or more lateral openings (74) with the longitudinal passage (72) in the spool (54).

## Description

This invention is concerned with a solenoid slide valve, particularly, though not exclusively, for fuel supply system to internal-combustion engines, such as diesel engines.

The supply circuit to a diesel engine generally comprises a supply pump driven by the engine itself, which delivers the fuel from a tank, through a filter, to an injection pump metering the fuel to the injectors for the several cylinders. An on-off valve in the fuel suction pipe is turned off to stop the engine, but the pump, which is mechanically driven by the engine itself, can still suck a few charges of fuel from the supply pipe, thus allowing the engine to run for a considerable time after the valve has been shut off. This, beside delaying the engine's shutdown, also may cause difficulties at the time of the next ignition, which are due to air bubbles created in the supply ducts by the injection pump.

As is well known, such on-off valve, depending on the application field, can be set up to be either normally open and closing on energization (Energized To Stop, or ETS), as it is always required for marine engines, or normally closed and therefore opening on energization (Energized To Run, or ETR), as it is usually the case with land engines, such as industrial engines and vehicle engines.

In order to palliate to such drawbacks, it has been proposed to provide a hydraulic fuel supply circuit in which, in lieu of a mere on-off valve, a four-way valve is installed: such a valve normally connects the suction port of the supply pump to the pipe coming from the tank, and is switched to connect the suction port to the delivery pipe when it is desired to shut down the engine.

However, in prior slide valves the electrodynamic action of the solenoid on the plunger generally has to overcome resistances depending on the fluid pressure in the hydraulic circuit that is to be switched, which fluid pressure at least partially acts on the valve slide, too. In order to switch the valve, relatively powerful solenoids must be used, and, even so, the switching is relatively slow. This leads to shutdown delays, which with engines of considerable power, such as usually are industrial and marine engines, always amount to at least ten seconds. Moreover, it is always necessary to provide two different setups for the slide valve, one as ETR and the other as ETS. For each type it is also necessary to provide different versions for different power ranges of the engines.

It is now the main object of the invention to provide a slide valve that can rapidly switch a fluid flow with a small electric power to the control solenoid.

Another object is to provide such solenoid valve so that it can be employed in supply circuits to diesel engines for shutting down the engine more rapidly than with prior means.

A further object is to provide such a solenoid valve, which can be used without changes both for ETS and for ETR operation.

The above objects, together with other objects and advantages such as will appear from the following disclosure, are achieved by the invention with a solenoid slide valve, particularly for supply pumps of diesel engines, as recited in claim 1.

The invention will now be described in more detail, with reference to a preferred embodiment given by way of example and shown in the attached drawings, wherein:
Fig. 1 is a view, in axial cross-section, of a solenoid slide valve with four ways and two positions, according to the preferred embodiment of the invention, in an unenergized state;
Fig. 2 is a view similar to the one of Fig. 1, the valve being in an energized state;
Fig. 3 is a view in transverse cross-section made on line III-III of Fig. 1;
Fig. 4 is a view in transverse cross-section made on line IV-IV of Fig. 1;
Fig. 5 is a diagram of a supply circuit for a diesel engine, comprising a solenoid valve according to Figs. 1 to 4, in an ETR setup; and
Fig. 6 is a diagram of a supply circuit for a diesel engine, comprising a solenoid valve according to Figs. 1 to 4, in an ETS setup.

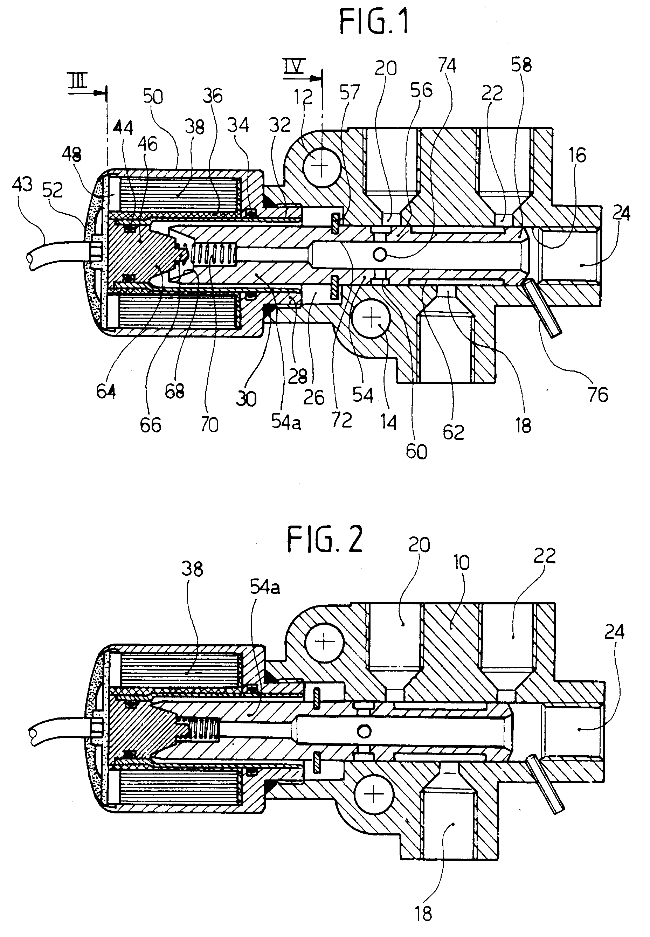

With reference to Fig. 1, the preferred embodiment of a solenoid slide valve according to the invention comprises a valve casing 10 of forged brass, which is provided with bracketing holes 12, 14 and is traversed by a cylindrical sliding bore 16, in whose lateral wall three hydraulic ports, 18, 20 and 22 are made, a fourth port 24 corresponding to the end of sliding bore 16.

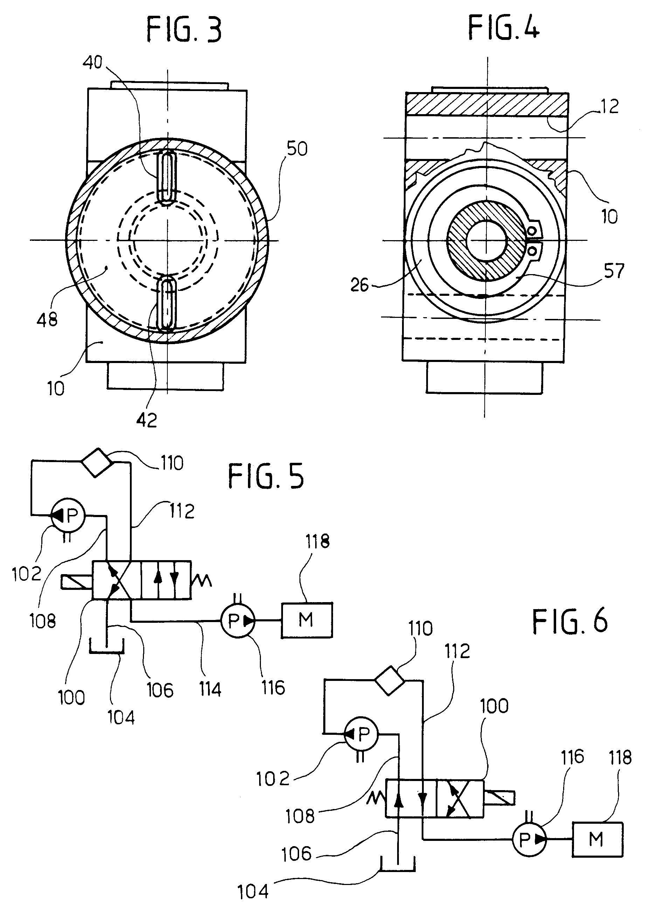

At its opposite end, sliding bore 16 has a countersink or chamber 26 of an enlarged size, in which a ring nut 28 of soft iron is screwed, with an O-ring gasket 30 for a sealing. A brass sleeve 32 is inserted in ring nut 28, with an O-ring gasket 34 to provide a sealing, and carries a fiberglass bobbin 36, bearing a solenoid 38. As best seen on Fig. 3, bobbin 36 has two slots 40, 42 on one of its end flanges, for passage of the solenoid terminals which lead to a cable 43.

A plug 46 of soft iron is inserted in the outside end of sleeve 32, again with an O-ring gasket 44 to provide a sealing. Plug 46 extends integrally into a disk-shaped plate 48 having two slots aligned with slots 40, 42 of bobbin 36. A cylindrical mantle 50 extending from ring nut 28, preferably integrally, surrounds solenoid 38 and is upset onto iron plate 48 to maintain in place both plug 46 and sleeve 32, thus forming a gapless magnetic circuit, which opposes a very low reluctance to the magnetic field generated by solenoid 38. Finally, a sealing resin 52 is fused on plate 48.

A spool 54 of soft iron is received with an easy push fit in bore 16, the spool extending integrally into sleeve 32 as a single cylindrical member, to constitute a plunger 54a of equal diameter. A lock spring washer 57 is received in a groove of spool 54 to act as an abutment in countersink 26, in order to limit the spool travel. Spool 54 has lands 56, 58, alternating with grooves 60, 62, so that in its axial travel it will suitably cover and uncover ports 18, 20, 22, 24, as is further described below.

Plug 46 extends into the internal space of sleeve 32 with a frusto-conical projection 64 terminating with a prong 66, and plunger 54a has at its external end a frusto-conical flared countersink 68 which is complementary to frusto-conical projection 64 of plug 46. In the bottom of countersink 68, a seat is made for a wound compression spring 70, resting against prong 66 of plug 54.

While spool 54 is received in an easy push fit in bore 16, the inside diameter of sleeve 32 is substantially larger than the outside diameter of the plunger: e.g., with a plunger diameter of 13 mm, the inside diameter of the sleeve is 14 mm, so that an annular gap of about 0.5 mm is formed between the plunger and the sleeve. Moreover, spool 54 is axially traversed by a longitudinal passage 72, which puts its opposite ends in mutual communication. Finally, longitudinal passage 72 also communicates with groove 60 through four transversal holes such as 74.

In the position shown on Fig. 1, the valve is unenergized and spring 70 biases spool 54 to the right, so that the first port 18 communicates with the third port 22 via groove 62, while the second port 20 communicates with the fourth port 24 through holes 74 and the longitudinal passage 72. When solenoid 38 is energized, spool 54 is sucked to the left, compressing spring 70. As shown on Fig. 2, in this condition the second and the third ports 20 and 22 are swapped: therefore, port 18 now communicates with port 20 via groove 62, while port 22 communicates with port 24 directly.

Preferably, the valve is also provided, as shown on Figs. 1 and 2, with an adjustment screw 76, which is screwed in a hole drilled obliquely in casing 10, to form an adjustable abutment for spool 54 in its rightward motion, to limit the spool travel.

Due to longitudinal passage 72 and to the gap between plunger 54a and sleeve 32, the fluid from port 24 can completely invade the entire room occupied by spool 54, including countersink 26 and sleeve 32, up to plug 46. This is true for all positions taken by the spool, so that the spool is at all times completely immersed in and completely surrounded by the fluid. Consequently, the axial thrusts exerted by the fluid pressure on the spool are at all times in balance, and the spool is in indifferent equilibrium with respect to the fluid. Therefore spring 64, which biases the spool to its rest position, can be made quite weak, and a low-rated solenoid is sufficient to translate the spool, in spite of the wide gap between the plunger and the sleeve. In other words, although the oversize gap between the plunger and the sleeve is a cause of a reduction of the magnetic efficiency of the solenoid, such reduction, however, is more than compensated by the advantage of the neutrality of the pushes from the fluid on the spool.

In conclusion, the valve effects switching of the hydraulic circuit in a much shorter time than known valves, and, moreover, the valve can be designed to draw a lower current for a given power (pressure × volume) of the controlled flow.

The frusto-conical projection 64 on plug 46 and the complementary flare on plunger 54a avoid any sudden change of the magnetic flux in the plunger when it moves off from plug 46.

The preferred embodiment of the solenoid valve as described above is specifically intended for application in a supply circuit for a diesel engine, as shown diagrammatically on Fig. 5. With reference to the above Figure, when solenoid valve 100 of Fig. 1 is energized, a pump 102 draws fluid fuel from a tank 104 through a pipe 106 plunging in the tank, solenoid valve 100 and a pipe 108. The fluid fuel is delivered to a filter 110 and then, again through a pipe 112, valve 100 and a supply pipe 114, to the injection pump 116 of a diesel engine 118.

When the sollenoid valve 100 is unenergized and switches the connections to its four ports, pump 102 starts sucking fluid from pipe 114, thus placing this pipe in depression and discharging the sucked fluid into filter 110, pipe 112, and again into pipe 106 through valve 100. It can be seen that the switching does not modify the flow direction in the stretch 106-102-108-110-112: accordingly, the only stretch in the circuit where the flow is inverted is pipe 114 (a parte l'interno della valvola). Therefore, on the one hand, the inertia of the switching is very low, and, on the other hand, no turbulences are created which would negatively affect the subsequent new ignition of the engine. Consequently, the engine's shutdown takes place in a very short time, e.g. in only 3 seconds with respect 10 seconds as in conventional circuits.

The hydraulic supply circuit shown on Fig. 5 and described above is of the type known as ETR (Energized to Run), where the valve must be energized to provide the supply, as required in most land engines, e.g. in industrial plants. In marine engines, on the other hand, an ETS (Energized to Stop) configuration is almost always required, where the valve at rest allows supply, while its energization cuts the supply to the engine. An ETS configuration is shown on Fig. 6, and is obtained by merely mounting the valve in an overturned position with respect to Fig. 5. In this way, ports 20 e 22 are swapped. In practical situations, where the ducts 108 e 112 are rigid pipes placed in fixed, standard positions, it is easy, using the valve of the invention, to swap the connections by simply overturning the valve.

It should be understood that the above describe solenoid valve can find application also in other fields, wherever a low-inertia, quickly switching, four-way valve is required. Moreover, in the light of the teachings above, the solenoid valve can be made in different setups, for instance with three or five ports, and even those setups should be regarded as included in the scope of the invention, as defined in the attached claims.

## Claims

1. A solenoid slide valve comprising a casing (10) having a bore (16) for slidably receiving a spool (54) provided with lands and grooves for controllably connecting with one another a plurality of ports (18, 20, 22, 24) opening in the casing, **characterized in that** a blind, fluid-tight chamber (26, 28, 32, 46) extends from the casing (10) coaxially with the bore (16), surrounded by an electromagnetic solenoid (38), a plunger (54a) being integral with the spool and movable in the blind chamber, and in that the plunger and the spool are traversed by a longitudinal passage (72) for fluid comunication, which passage is open at both ends.

2. The solenoid slide valve of claim 1, characterized in that the plunger (54a) and the spool (54b) are obtained integrally from a single, elongated, cylindrical body of uniform diameter.

3. The solenoid slide valve of claim 1 or 2, characterized in that said blind chamber (26, 28, 32, 46) is made of a metal sleeve (32) tightly bonded to a a ring nut (28) screwed in the casing (10) at one end of the bore, the sleeve being closed by a plug (46) at its opposite end.

4. The solenoid slide valve of claim 3, characterized in that the inside diameter of said sleeve (32) is substantially larger than the outside diameter of the plunger (54a), so that a gap is formed therebetween.

5. The solenoid slide valve of one of claims 1 to 4, characterized in that a spring (70) is interposed between the plunger and the plug.

6. The solenoid slide valve of one of claims 3 to 5, characterized in that said plug (46) has a tapered projection (64) towards the plunger, and the plunger is formed towards the plug with a flared countersink (68) of a complementary shape to the tapered projection.

7. The solenoid slide valve of one of claims 1 to 6, characterized in that a screw (76) is screwed obliquely in the casing, which screw constitutes an adjustable abutment to the spool (54) as it moves away from the plug (46).

8. The solenoid slide valve of one of claims 1 to 7, characterized in that four communication ports (18, 20, 22, 24) open in said casing, of which ports three (18, 20, 22) open in the lateral wall of the bore (16) and the fourth port (24) opens in one end of the casing, and in that the longitudinal passage (72) in the spool (54) communicates through one or more openings (74) with one of its peripheral grooves (60).

9. The solenoid slide valve of claim 8, characterized in that the travel of the spool (54) between both positions of energization and of unenergization is smaller than the diameter of each of said three ports (18, 20, 22) opening in the lateral wall of the bore (16).

10. The solenoid slide valve of claim 9, characterized in that the travel of the spool (54) is approximately equal to half the diameter of each of said three ports (18, 20, 22) opening in the lateral wall of the bore.
